# EUROPEAN PATENT APPLICATION

(11) **EP 4 838 265 A1**
(43) Date of publication of application: **11.11.2026**
(21) Application number: 25736344.0
(22) Date of filing: 03.01.2025
(51) Int. Cl.: G01S 19/48, G01S 19/14, G01C 11/00, H01Q 1/32, H01Q 1/36

(54) **POSITIONING INTEGRATED APPARATUS AND DRIVING DEVICE THEREOF**

(30) Priority: 03.01.2024 CN 202410012334
(71) Applicant: Shanghai Huace Navigation Technology Ltd., Shanghai 201702 (CN)
(72) Inventor: ZHANG, Yili, Shanghai 201702 (CN); LV, Bo, Shanghai 201702 (CN); ZHONG, Wentao, Shanghai 201702 (CN); TIAN, Ye, Shanghai 201702 (CN); YANG, Kongwan, Shanghai 201702 (CN); YU, Kun, Shanghai 201702 (CN); LIN, Zhongjun, Shanghai 201702 (CN)
(74) Representative: De Arpe Tejero, Manuel
(86) International application number: PCT/CN2025/070460
(87) International publication number: WO 2025/146140

(57) **Abstract**

The present disclosure provides a positioning integrated apparatus and a driving device thereof, the positioning integrated apparatus (1) comprises a helical antenna (10) and a camera assembly (20), the helical antenna (10) comprises a helical antenna main body (110) and a feed board (120), the helical antenna main body (110) is arranged around the feed board (120), an accommodating space (130) with an opening is formed between the feed board (120) and the surrounding helical antenna main body (110), the camera assembly (20) comprises a camera module (210), the camera assembly (20) is arranged in the accommodating space (130), the camera assembly (20) is connected to the feed board (120), and the field of view of the camera module (20) faces the opening (110A) of the accommodating space (130).

## Description

### CROSS-REFERENCE TO RELATED APPLICATIONS

The present disclosure claims priority to Chinese patent application No. 2024100123344, titled "positioning integrated apparatus and driving device thereof", filed with the China National Intellectual Property Administration on January 03, 2024, the entire content of which is incorporated herein by reference.

### TECHNICAL FIELD

The present disclosure relates to the field of positioning technology, and in particular, to a positioning integrated apparatus and a driving device thereof.

### BACKGROUND

In order to improve the positioning accuracy of the Global Navigation Satellite System (GNSS) in complex environments, cameras and other sensors are used on GNSS receiver devices such as those for surveying, mapping, and automotive navigation to assist GNSS positioning. The method of integrating photogrammetry technology with satellite navigation technology enhances the usability of navigation and positioning services in complex scenarios.

The GNSS positioning antennas used in traditional terminal devices are usually a separate receiving device. When visual assistance is required to improve GNSS positioning accuracy, an additional camera device needs to be equipped to provide image information. Therefore, in traditional terminal devices, the positioning antenna and the camera device are two separate devices, resulting in large space occupation of the terminal device.

### SUMMARY

The purpose of the embodiments of the present disclosure is to provide a positioning integrated apparatus and a driving device thereof, so as to solve the problem that in current traditional terminal devices, the positioning antenna and the camera device are two separate devices, resulting in large space occupation of the terminal device.

Optionally, the present disclosure provides a positioning integrated apparatus, the positioning integrated apparatus comprises a helical antenna and a camera assembly, the helical antenna comprises a helical antenna main body and a feed board, the helical antenna main body is arranged around the feed board, an accommodating space with an opening is formed between the feed board and the surrounding helical antenna main body, the camera assembly comprises a camera module, the camera assembly is arranged in the accommodating space, the camera assembly is connected to the feed board, and the field of view of the camera module faces the opening of the accommodating space.

The designed positioning integrated apparatus, the helical antenna forms an accommodating space with an opening facing the end by arranging the helical antenna main body around the feed board, on this basis, the solution arranges the camera assembly in the accommodating space, and fixes the camera assembly with the feed board, the field of view of the camera module faces the end of the opening, on the basis of achieving the effects of antenna positioning and visual assistance, the camera assembly is integrated into the internal space of the helical antenna, so that the designed positioning integrated apparatus has only the volume size of the helical antenna, which greatly reduces the space occupancy of the terminal device and enables miniaturization of the terminal device.

In an optional implementation manner, the camera assembly further comprises a support column, one end of the support column is connected to the feed board, and the other end of the support column is connected to the camera module. This implementation manner supports and elevates the camera module through the support column, so that the field of view of the camera module is not blocked by the accommodating space, thereby improving the shooting effect of the positioning integrated apparatus.

In an optional implementation manner, the inner diameter of the accommodating space is larger than the diameter of the support column, the central axis of the accommodating space, the central axis of the support column, and the central axis of the camera module are coaxially aligned. This implementation manner makes the central axis of the helical antenna, the central axis of the support column, and the central axis of the camera module coincide, and the inner diameter of the accommodating space is larger than the diameter of the support column, so that the camera assembly is arranged at the center of the accommodating space, and the camera assembly does not contact with the accommodating space (i.e., the helical antenna main body), thereby avoiding the influence of the contact between the camera assembly and the helical antenna main body on the antenna function, and further improving the reliability of the positioning integrated apparatus.

In an optional implementation manner, the camera assembly further comprises an adjuster, the adjuster is arranged between the support column and the camera module, and the adjuster is configured to adjust the focal length of the camera module. This implementation manner adjusts the focal length of the camera module through the adjuster, thereby improving the camera effect of the positioning integrated apparatus.

In an optional implementation manner, the total height of the support column, the adjuster, and the camera module is equal to the height of the accommodating space. This implementation manner designs the total height of the support column, the adjuster, and the camera module to be equal to the height of the accommodating space, so that the camera module is flush with the opening end of the accommodating space, thereby ensuring that the field of view of the camera module is not affected and improving the camera effect of the camera module.

In an optional implementation manner, the support column is a hollow column. This implementation manner designs the support column as a hollow column, so that the wire harness of the camera module can extend to the outside through the hollow column and the feed board, thereby improving the integration degree of the positioning integrated apparatus. Meanwhile, the wire harness of the antenna and the wire harness of the camera assembly in the positioning integrated apparatus can extend from one device at the same time, thereby improving the installation portability of the device.

In an optional implementation manner, the camera module is connected to the feed board, and the height of the accommodating space is consistent with the height of the camera module.

In an optional implementation manner, the camera module is connected to the feed board, and the height of the accommodating space is greater than the height of the camera module.

In an optional implementation manner, the helical antenna main body comprises a substrate and a radiator attached to the surface of the substrate, the substrate is arranged around the feed board to form a cylindrical shape, an annular metal line is arranged at the top end of the substrate, the radiator comprises at least one set of helical antenna units, the at least one set of helical antenna units are arranged around the substrate in the same direction to form a helical antenna, each set of helical antenna units comprises a first helical antenna and a second helical antenna, the length of the first helical antenna is greater than the length of the second helical antenna, the first helical antenna is configured to excite low frequency, the second helical antenna is configured to excite high frequency, a feeding network is arranged on the opposite surface of the feed board connected to the helical antenna main body, the feeding network comprises a plurality of feeding points, the first ends of the first helical antennas are all connected to the annular metal line, the second ends of the first helical antennas are connected to the second ends of the corresponding second helical antennas and then connected to the corresponding feeding points of the feeding network, and different helical antenna units are connected to different feeding points. This implementation manner achieves low frequency and high frequency through helical antennas of different lengths, so that the helical antenna receives multiple frequency bands.

Optionally, the present disclosure provides a driving device, the driving device comprises the positioning integrated apparatus of any one of the above optional implementation manners.

The designed driving device, since it comprises the positioning integrated apparatus of any one of the above optional implementation manners, when the driving device is equipped with the positioning integrated apparatus, the space occupied is low, thereby improving the space utilization rate of the driving device.

### BRIEF DESCRIPTION OF THE DRAWINGS

In order to more clearly illustrate the technical solutions of the embodiments of the present disclosure, the drawings used in the embodiments of the present disclosure will be briefly introduced below. It should be understood that the following drawings only show some embodiments of the present disclosure, and therefore should not be regarded as limiting the scope. For those skilled in the art, other related drawings can also be obtained based on these drawings without creative effort.
Fig. 1 is a first structural schematic diagram of the positioning integrated apparatus provided by an embodiment of the present disclosure.
Fig. 2 is a second structural schematic diagram of the positioning integrated apparatus provided by an embodiment of the present disclosure.
Fig. 3 is a third structural schematic diagram of the positioning integrated apparatus provided by an embodiment of the present disclosure.
Fig. 4 is a structural schematic diagram of the camera assembly provided by an embodiment of the present disclosure.
Fig. 5 is a structural schematic diagram of the driving device provided by an embodiment of the present disclosure.

Reference numerals: 1-positioning integrated apparatus; 2-driving device; 10-helical antenna; 110-helical antenna main body; 1110-substrate; 1120-radiator; 11210-helical antenna unit; 11210A-first helical antenna; 11210B-second helical antenna; 1130-annular metal line; 110A-opening; 120-feed board; 1210-feeding network; 1210A-feeding point; 130-accommodating space; 20-camera assembly; 210-camera module; 220-support column; 230-adjuster.

### DETAILED DESCRIPTION

The embodiments of the present disclosure will be described in detail below with reference to the accompanying drawings. The following embodiments are only used to more clearly illustrate the technical solutions of the present disclosure, and therefore serve only as examples and shall not be used to limit the protection scope of the present disclosure.

Unless otherwise defined, all technical and scientific terms used herein have the same meanings as commonly understood by those skilled in the art to which the present disclosure belongs. The terms used herein are only for the purpose of describing specific embodiments and are not intended to limit the present disclosure. The terms "including" and "having" in the specification, claims and the above description of the drawings of the present disclosure, and any variations thereof, are intended to cover non-exclusive inclusion.

In the description of the embodiments of the present disclosure, the technical terms "first", "second", etc. are only used to distinguish different objects and shall not be understood as indicating or implying relative importance or implicitly indicating the quantity, specific order or primary-secondary relationship of the indicated technical features. In the description of the embodiments of the present disclosure, "a plurality of" means two or more unless otherwise explicitly and specifically defined.

Reference to "embodiments" herein means that specific features, structures or characteristics described in connection with the embodiments may be comprised in at least one embodiment of the present disclosure. The appearance of this phrase at various places in the specification does not necessarily all refer to the same embodiment, nor are they independent or alternative embodiments mutually exclusive with other embodiments. Those skilled in the art explicitly and implicitly understand that the embodiments described herein may be combined with other embodiments.

In the description of the embodiments of the present disclosure, the term "and/or" is merely a description of the association relationship of associated objects, indicating that three relationships may exist. For example, A and/or B may indicate: A exists alone, A and B exist simultaneously, and B exists alone. In addition, the character "/" herein generally indicates that the associated objects before and after have an "or" relationship.

In the description of the embodiments of the present disclosure, the term "a plurality of" refers to more than two (including two). Similarly, "a plurality of sets" refers to more than two sets (including two sets), and "a plurality of pieces" refers to more than two pieces (including two pieces).

In the description of the embodiments of the present disclosure, the technical terms "center", "length", "width", "thickness", "upper", "lower", "front", "rear", "left", "right", "top", "bottom", "inner", "outer", etc. indicate the orientation or positional relationship based on the orientation or positional relationship shown in the drawings, and are only for the convenience of describing the embodiments of the present disclosure and simplifying the description, rather than indicating or implying that the indicated device or element must have a specific orientation, be constructed and operated in a specific orientation, and therefore shall not be understood as limiting the embodiments of the present disclosure.

In the description of the embodiments of the present disclosure, unless otherwise explicitly specified and defined, the technical terms "mounted", "connected", "connected", "fixed", etc. shall be understood in a broad sense. For example, it may be a fixed connection or a detachable connection, or an integral body. It may also be a mechanical connection or an electrical connection. It may be a direct connection or an indirect connection through an intermediate medium, and may be an internal connection between two elements or an interaction relationship between two elements. For those of ordinary skill in the art, the specific meanings of the above terms in the embodiments of the present disclosure may be understood according to specific situations.

In order to improve the positioning accuracy of the Global Navigation Satellite System (GNSS) in complex environments, cameras and other sensors are used on GNSS receiver devices such as those for surveying, mapping, and automotive navigation to assist GNSS positioning. The method of integrating photogrammetry technology with satellite navigation technology enhances the usability of navigation and positioning services in complex scenarios.

The GNSS positioning antennas used in traditional terminal devices are usually a separate receiving device. When visual assistance is required to improve GNSS positioning accuracy, an additional camera device needs to be equipped to provide image information. Therefore, in traditional terminal devices, the positioning antenna and the camera device are two separate devices, resulting in large space occupation of the terminal device.

To address the above problem, the present disclosure designs a positioning integrated apparatus and a driving device thereof, utilizing the internal space of the helical antenna to integrate the camera assembly into the internal space of the helical antenna, so that the designed positioning integrated apparatus, while achieving antenna positioning and visual assistance, has only the volume size of the helical antenna, which greatly reduces the space occupancy of the terminal device and enables miniaturization of the terminal device. Furthermore, in the positioning integrated apparatus designed by this solution, the wire harness of the antenna and the wire harness of the camera assembly can extend from one device at the same time, thereby improving the installation portability of the device.

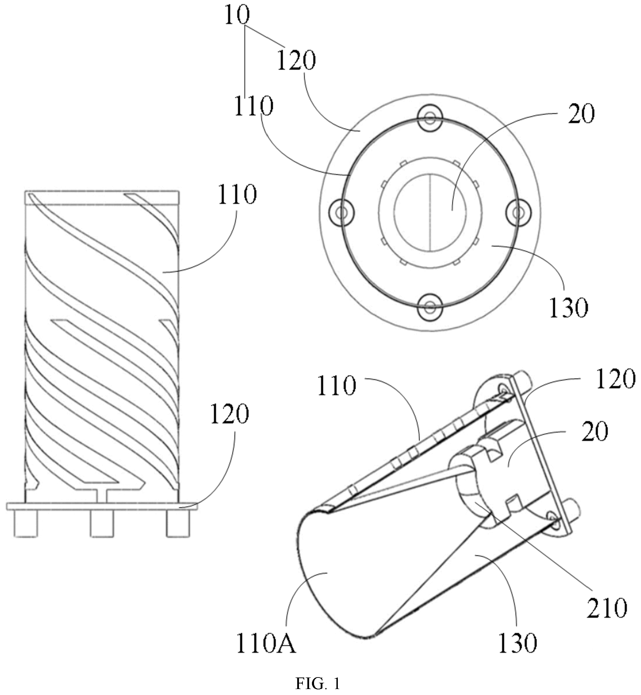

Based on the above idea, the present disclosure provides a positioning integrated apparatus. As shown in fig. 1, the positioning integrated apparatus comprises a helical antenna 10 and a camera assembly 20. The helical antenna 10 comprises a helical antenna main body 110 and a feed board 120, the helical antenna main body 110 is arranged around the feed board 120, an accommodating space 130 with an opening 110A is formed between the feed board 120 and the surrounding helical antenna main body 110, the camera assembly 20 comprises a camera module 210, the camera assembly 20 is arranged in the accommodating space 130, the camera assembly 20 is connected to the feed board 120, and the field of view of the camera module 210 faces the opening 110A. The helical antenna 10 may be in any current form of helical antenna, for example, a four-arm helical antenna, and its working principle is consistent with that of current helical antennas, which will not be repeated herein. The camera module 210 refers to a module with camera or photography functions, for example, a micro camera or a pinhole camera. Of course, in addition to the camera photography function components, the camera module 210 may also comprise storage components for storing data captured by the camera module 210.

In the designed positioning integrated apparatus, the helical antenna forms an accommodating space with an opening facing the end by arranging the helical antenna main body around the feed board. On this basis, this solution arranges the camera assembly in the accommodating space, fixes the camera assembly with the feed board, and the field of view of the camera module faces the end of the opening. On the basis of achieving the effects of antenna positioning and visual assistance, the camera assembly is integrated into the internal space of the helical antenna, so that the designed positioning integrated apparatus has only the volume size of the helical antenna, which greatly reduces the space occupancy of the terminal device and enables miniaturization of the terminal device.

In an optional implementation manner of this embodiment, as a possible implementation manner, as shown in fig. 1, the camera assembly 20 may only comprise the camera module 210, and the height of the accommodating space 130 is greater than the height of the camera module 210. This solution arranges the camera module 210 in the accommodating space 130, and the camera module 210 is directly connected to the feed board 120. In this case, the designed positioning integrated apparatus may utilize the optical effect of the camera module 210 to obtain the field of view.

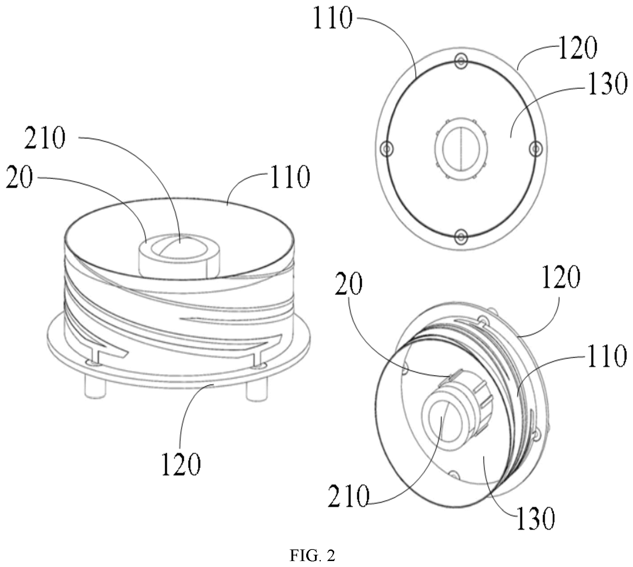

In an optional implementation manner of this embodiment, as another possible implementation manner, as shown in fig. 2, the camera assembly 20 also only comprises the camera module 210. In this case, this solution arranges the camera module 210 in the accommodating space 130, and the camera module 210 is directly connected to the feed board 120. Furthermore, in order to obtain a wider camera field of view, this solution reduces the cross section of the helical antenna main body 110, increases the inner diameter of the accommodating space 130 formed by the helical antenna main body 110, and the height of the accommodating space 130 is equal to the height of the camera module 210, so that the camera module 210 has a wider camera field of view.

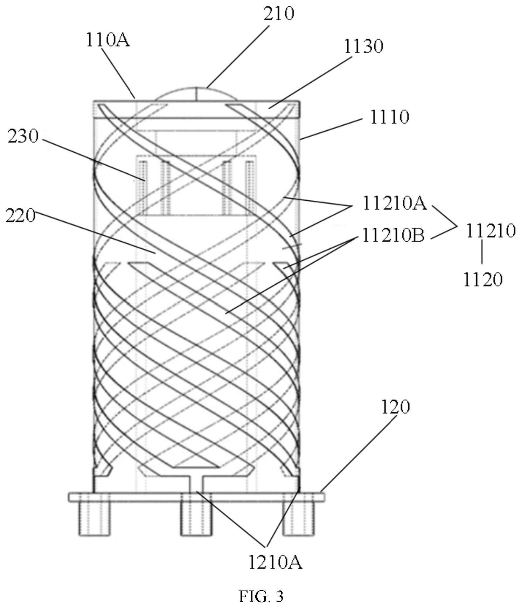

In an optional implementation manner of this embodiment, since the formed accommodating space 130 generally has a certain depth, as yet another possible implementation manner, as shown in fig. 3, the camera assembly 20 designed by this solution may further comprise a support column 220. One end of the support column 220 is connected to the feed board 120, and the other end of the support column 220 is connected to the camera module 210, so that the camera module 210 is supported and elevated by the support column 220, raising the camera module 210 close to the opening 110A of the accommodating space 130, so that the camera field of view of the camera module 210 is not blocked by the accommodating space 130, thereby improving the camera effect of the camera assembly 20.

As a possible implementation manner, please continue to refer to fig. 3. The inner diameter of the accommodating space 130 designed by this solution is greater than the diameter of the support column 220, and the central axis of the accommodating space 130, the central axis of the support column 220, and the central axis of the camera module 210 are coaxially aligned. This enables the support column 220 to be entirely accommodated in the accommodating space 130 and located at the center of the accommodating space 130, and since the inner diameter of the accommodating space 130 is greater than the diameter of the support column 220, the support column 220 does not contact the inner wall of the accommodating space 130 (i.e., the helical antenna main body 110), thereby avoiding the influence of the contact between the support column 220 and the camera module 210 with the helical antenna main body 110 on the helical antenna function. It should be noted here that when it is determined that the contact between the camera assembly 20 and the helical antenna main body 110 does not affect the helical antenna function, the camera assembly 20 in the designed positioning integrated apparatus may contact the helical antenna main body 110.

In an optional implementation manner of this embodiment, as shown in fig. 3, the camera assembly 20 may further comprise an adjuster 230, the adjuster 230 is arranged between the support column 220 and the camera module 210, and the adjuster 230 is configured to adjust the focal length of the camera module 210.

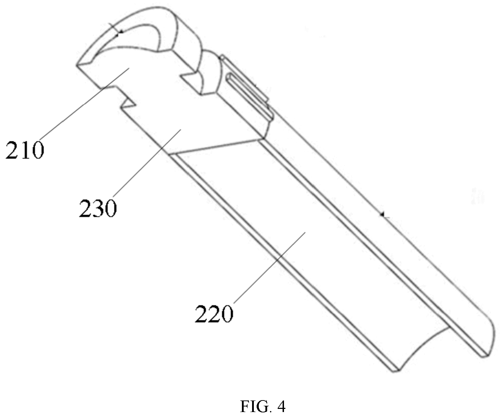

As a possible implementation manner, please continue to refer to fig. 4. The total height of the support column 220, the adjuster 230, and the camera module 210 designed by this solution is equal to the height of the accommodating space, so that the height of the camera module 210 is substantially flush with the height of the accommodating space 130, thereby ensuring that the camera module 210 is not blocked in its field of view by the inner wall of the accommodating space 130, thereby improving the camera effect.

In an optional implementation manner of this embodiment, as shown in fig. 4, the support column 220 designed by this solution is a hollow column, so that the wire harness of the camera module 210 can pass through the space of the hollow support column 220, then pass through the center of the feed board 120, and extend to the outside to connect with other interfaces, so that the wire harness of the helical antenna and the wire harness of the camera assembly can extend from one device at the same time, thereby improving the installation portability of the device.

In an optional implementation manner of this embodiment, please refer to fig. 1 to fig. 3. The helical antenna main body 110 described above may comprise a substrate 1110 and a radiator 1120 attached to the surface of the substrate 1110, wherein the substrate 1110 is arranged around the feed board 120 to form a cylindrical shape, the radiator 1120 is attached to the outer surface of the cylindrical substrate 1110, the inner surface of the substrate 1110 and the feed board 120 form the accommodating space 130, and an annular metal line 1130 is arranged at the top end of the substrate, so that the designed annular metal line 1130 is connected to the helical antenna for exciting low frequency, thereby improving the positioning accuracy of the antenna.

The radiator 1120 comprises at least one set of helical antenna units 11210, the at least one set of helical antenna units 11210 are arranged around the substrate in the same direction to form a helical antenna. Each set of helical antenna units 11210 comprises a first helical antenna 11210A and a second helical antenna 11210B, the length of the first helical antenna 11210A is greater than the length of the second helical antenna 11210B, the first helical antenna 11210A is configured to excite low frequency, and the second helical antenna 11210B is configured to excite high frequency. The helical antenna unit 11210 may be one set or multiple sets. In the case of multiple sets, it may be 2 sets or 4 sets or more.

A feeding network 1210 (not shown in the figure) is arranged on the opposite surface of the feed board 120 connected to the helical antenna main body 110, the feeding network 1210 comprises a plurality of feeding points 1210A, the first ends of the first helical antennas 11210A are all connected to the annular metal line 1130, the second ends of the first helical antennas 11210A are connected to the second ends of the corresponding second helical antennas 11210B and then connected to the corresponding feeding points 1210A of the feeding network 1210, and different helical antenna units 11210 are connected to different feeding points 1210A.

The substrate 1110 described above may specifically be a Flexible Printed Circuit (FPC) material, which has a small volume and good temperature resistance, and can meet the special requirements of automotive electronic devices. In addition, the FPC antenna can achieve a thickness of a few tenths of a millimeter, and its flexibility and reliability can adapt to environmental vibration and temperature changes. By printing metal lines on the FPC and then winding it into a cylindrical shape, the antenna structure can be obtained, and its cost and manufacturing complexity are greatly reduced.

The feed board 120 described above may specifically be a metal plate, which may specifically be made of Printed Circuit Board (PCB) material. The surface of the feed board 120 in contact with the substrate 1110 is a metal surface (for example, copper, aluminum, silver, or others), and it is provided with a plurality of feeding points. The feed board 120 may also specifically be disc-shaped, and its diameter may be slightly larger than the diameter of the upper and lower bases of the cylinder formed by winding the substrate.

In an optional implementation manner of this embodiment, as a specific implementation manner, the helical antenna unit 11210 described above may specifically be 4 sets. In this case, the helical antenna designed by this solution is a four-arm helical antenna, the structure of each set of helical antenna units 11210 is the same, the four sets of helical antenna units 11210 may be uniformly distributed at 90° intervals at the center of the cylindrical surface formed by the substrate 1110, and each set of helical antenna units 11210 has a longer first helical antenna 11210A and a shorter second helical antenna 11210B, thereby achieving two operating frequencies of one low and one high antenna frequency to radiate and receive low-frequency and high-frequency electromagnetic waves. The helical antenna designed by this solution may adjust the working frequency band of the helical antenna by adjusting the lengths of the first helical antenna 11210A and the second helical antenna 11210B, so that the helical antenna can operate in the frequency band corresponding to the GNSS system.

When the helical antenna unit 11210 is 4 sets, the feeding points designed by this solution also have 4, and in the feeding network of the feed board 120, each feeding point has a 90° phase difference, and the phase decreases around the center in a right-hand spiral direction, thereby being able to generate a right-hand circularly polarized wave. The antenna with 4 feeding points has a more stable phase center, resulting in higher positioning accuracy of GNSS navigation.

In addition, it should be noted here that the helical antenna unit 11210 of this solution may also be in other quantity forms, for example, 2 sets of symmetrically arranged helical antenna units, i.e., uniformly distributed at 180° intervals, or 8 sets of symmetrically arranged helical antenna units, i.e., uniformly distributed at 45° intervals, and the specific form may be adaptively adjusted according to actual application scenarios. In addition, since the helical antenna is backward radiating, the first helical antenna 11210A and the second helical antenna 11210B in the helical antenna unit 11210 designed by this solution are both wound in a manner satisfying a left-hand spiral.

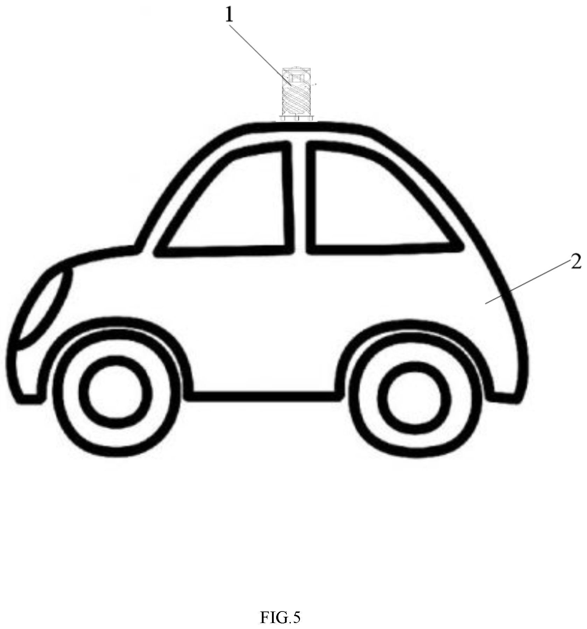

The present disclosure further provides a driving device. As shown in fig. 5, the driving device 2 may comprise the positioning integrated apparatus 1 described in any of the above optional implementation manners, so that the driving device 2 improves the positioning accuracy of the driving device after being equipped with the designed positioning integrated apparatus 1.

The designed driving device, since it comprises the positioning integrated apparatus of any of the above optional implementation manners, when the driving device is equipped with the positioning integrated apparatus, the space occupied is low, thereby improving the space utilization rate of the driving device.

Finally, it should be noted that the above embodiments are only used to illustrate the technical solutions of the present disclosure and not to limit them. Although the present disclosure has been described in detail with reference to the foregoing embodiments, those of ordinary skill in the art should understand that they may still modify the technical solutions described in the foregoing embodiments or make equivalent replacements for part or all of the technical features. These modifications or replacements do not cause the essence of the corresponding technical solutions to depart from the scope of the technical solutions of the embodiments of the present disclosure, and they should all be covered within the scope of the claims and specification of the present disclosure. In particular, as long as there is no structural conflict, the technical features mentioned in each embodiment may be combined in any manner. The present disclosure is not limited to the specific embodiments disclosed herein, but comprises all technical solutions falling within the scope of the claims.

### Industrial applicability.

By adopting the above solution, the designed positioning integrated apparatus has only the volume size of the helical antenna, which greatly reduces the space occupancy of the terminal device and enables miniaturization of the terminal device.

## Claims

1. A positioning integrated apparatus,comprising a helical antenna and a camera assembly, the helical antenna comprises a helical antenna main body and a feed board, the helical antenna main body is arranged around the feed board, an accommodating space with an opening is formed between the feed board and the helical antenna main body,
the camera assembly comprises a camera module, the camera assembly is arranged in the accommodating space, the camera assembly is connected to the feed board, and a field of view of the camera module faces the opening of the accommodating space.

2. The positioning integrated apparatus according to claim 1, wherein the camera assembly further comprises a support column, one end of the support column is connected to the feed board, and the other end of the support column is connected to the camera module.

3. The positioning integrated apparatus according to claim 2, wherein an inner diameter of the accommodating space is larger than a diameter of the support column, and a central axis of the accommodating space, a central axis of the support column, and a central axis of the camera module are coaxially aligned.

4. The positioning integrated apparatus according to claim 2 or 3, wherein the camera assembly further comprises an adjuster, the adjuster is arranged between the support column and the camera module, and the adjuster is configured to adjust a focal length of the camera module.

5. The positioning integrated apparatus according to claim 4, wherein a total height of the support column, the adjuster, and the camera module is equal to a height of the accommodating space.

6. The positioning integrated apparatus according to any one of claims 2-5, wherein the support column is a hollow column.

7. The positioning integrated apparatus according to any one of claims 1-6, wherein the camera module is connected to the feed board, and the height of the accommodating space is consistent with a height of the camera module.

8. The positioning integrated apparatus according to any one of claims 1-7, wherein the camera module is connected to the feed board, and the height of the accommodating space is greater than a height of the camera module.

9. The positioning integrated apparatus according to any one of claims 1-8, wherein the helical antenna main body comprises a substrate and a radiator attached to a surface of the substrate, the substrate is arranged around the feed board to form a cylindrical shape, an annular metal line is arranged at a top end of the substrate;
the radiator comprises at least one set of helical antenna units, the at least one set of helical antenna units are arranged around the substrate in the same direction to form the helical antenna, each set of helical antenna units comprises a first helical antenna and a second helical antenna, a length of the first helical antenna is greater than a length of the second helical antenna, the first helical antenna is configured to excite low frequency, the second helical antenna is configured to excite high frequency;
a feeding network is arranged on a surface of the feed board opposite to a side connected to the helical antenna main body, the feeding network comprises a plurality of feeding points, the first ends of the first helical antennas are all connected to the annular metal line, the second ends of the first helical antennas are connected to the second ends of the corresponding second helical antennas and then connected to the corresponding feeding points of the feeding network, and different helical antenna units are connected to different feeding points.

10. A driving device, comprising the positioning integrated apparatus according to any one of claims 1-9.
